# EUROPEAN PATENT APPLICATION

(11) **EP 4 848 787 A1**
(43) Date of publication of application: **02.12.2026**
(21) Application number: 25747580.6
(22) Date of filing: 17.01.2025
(51) Int. Cl.: H04W 24/06

(54) **COMMUNICATION METHOD, COMMUNICATION APPARATUS AND COMMUNICATION SYSTEM**

(30) Priority: 02.02.2024 CN 202410153398
(71) Applicant: HUAWEI TECHNOLOGIES CO., LTD., Shenzhen, Guangdong 518129 (CN)
(72) Inventor: DONG, Weiwei, Shenzhen, Guangdong 518129 (CN); TANG, Yuanxian, Shenzhen, Guangdong 518129 (CN); ZHOU, Qiang, Shenzhen, Guangdong 518129 (CN)
(74) Representative: Huawei European IPR
(86) International application number: PCT/CN2025/073057
(87) International publication number: WO 2025/162008

(57) **Abstract**

This application provides a communication method, a communication apparatus, and a communication system. In the method, a first device determines, based on a first model, whether collected sample data can be reported. Because the first model is obtained through training based on a large amount of sample data, a sample data analysis function of the first model is powerful, which helps improve the data collection efficiency and data collection quality. In addition, analyzing the sample data based on the first model may filter out sample data that does not meet a reporting condition. That is, an output result indicates that the sample data is not to be reported. In this way, the first device reduces the frequency of reporting the sample data that does not meet a requirement, so that the data processing load is reduced, and the data collection efficiency and the data collection quality can be further improved. In addition, such a data collection solution is flexible and efficient.

## Description

### CROSS-REFERENCE TO RELATED APPLICATIONS

This application claims priority to Chinese Patent Application No. 202410153398.6, filed with the China National Intellectual Property Administration on February 2, 2024 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

In the wireless communication field, in more and more application scenarios, data analysis needs to be performed based on collected massive data, and a corresponding operation is performed based on the data analysis result. For example, network load balancing is performed based on the data analysis result.

However, how to improve the data collection efficiency and data collection quality remains to be resolved.

### SUMMARY

Embodiments of this application provide a communication method, a communication apparatus, and a communication system, to improve the data collection efficiency and data collection quality.

According to a first aspect, an embodiment of this application provides a communication method. The method may be performed by a first device or a module (for example, a chip) in the first device. The method includes: receiving a first instruction, where the first instruction includes indication information and an identifier of a first model, and the indication information indicates to perform data reporting based on the first model; and inputting collected sample data into the first model, to obtain an output result, where the output result indicates to report or not to report the sample data. In addition, such a data collection solution is flexible and efficient.

In the foregoing solution, the first device determines, based on the first model, whether the collected sample data can be reported. Because the first model is obtained through training based on a large amount of sample data, a sample data analysis function of the first model is powerful, which helps improve the data collection efficiency and data collection quality. In addition, analyzing the sample data based on the first model may filter out sample data that does not meet a reporting condition. That is, an output result indicates that the sample data is not to be reported. In this way, the first device reduces the frequency of reporting the sample data that does not meet a requirement, so that the data processing load is reduced, and the data collection efficiency and the data collection quality can be further improved.

In a possible implementation method, when the sample data meets a first condition, the output result indicates to report the sample data, and the first condition includes at least one of the following: a feature value of at least one service feature in the sample data meets a feature value magnitude requirement; the feature value of the at least one service feature in the sample data meets a reporting periodicity requirement, and the reporting periodicity requirement is related to a degree of variation of the feature value of the service feature within a specified duration; and the feature value of the at least one service feature in the sample data meets a feature value distribution requirement corresponding to the service feature.

In the foregoing solution, a reporting periodicity of the feature value of the service feature is associated with the degree of variation of the feature value of the service feature within the specified duration, so that the frequency of reporting the feature value can be controlled, which helps reduce a redundancy degree of reported feature values. For example, a smaller degree of variation indicates a higher repetition degree (or redundancy degree) of the feature value of the service feature in a recent period of time. Therefore, the frequency of reporting the feature value is lower (in other words, the reporting periodicity is longer), which helps reduce repeated reporting of a same or similar feature value. In this way, the data collection efficiency and the data collection quality can be improved. In addition, in the foregoing solution, when the feature value of the service feature meets the feature value magnitude requirement or the feature value distribution requirement corresponding to the service feature, the first device may be further controlled to collect an expected feature value, to reduce collection of invalid data (namely, an unexpected feature value). In this way, the data collection efficiency is improved.

In a possible implementation method, the degree of variation of the feature value of the service feature within the specified duration includes a variance, a mean absolute error, an autocorrelation coefficient, a signal-to-noise ratio, or peak detection of the feature value of the service feature within the specified duration.

In a possible implementation method, the service feature includes one or more of the following: performance data of the first device, measurement data of a single terminal device, or measurement data of a group of terminal devices. When the first device includes a central unit (central unit, CU) or a distributed unit (distributed unit, DU), the performance data of the first device includes one or more of the following: coverage strength, coverage quality, quantity of handovers, throughput rate, quantity of access attempts, or quantity of call drops. When the first device includes a radio unit (radio unit, RU), the performance data of the first device includes one or more of the following: transmit power, receive level, noise floor, or bit error rate. The measurement data of the single terminal device includes one or more of the following: throughput rate, traffic volume, and quantity of handovers. The measurement data of the group of terminal devices includes one or more of the following: throughput rate, traffic volume, and quantity of handovers.

In a possible implementation method, the method further includes: sending the sample data when the output result indicates to report the sample data; or discarding the sample data when the output result indicates not to report the sample data.

In a possible implementation method, the first instruction further includes an identifier of the first device.

In a possible implementation method, the first device includes a CU or a DU; and the receiving the first instruction includes: receiving the first instruction from a near-real-time radio access network intelligent controller through an interface between the first device and the near-real-time radio access network intelligent controller.

In a possible implementation method, the first device includes an RU; and the receiving the first instruction includes: receiving the first instruction from a near-real-time radio access network intelligent controller through an interface between the RU and a DU.

In a possible implementation method, the method further includes: receiving a second instruction, where the second instruction includes file information of the first model.

In a possible implementation method, the first device includes a CU or a DU; and the receiving the second instruction includes: receiving the second instruction from a near-real-time radio access network intelligent controller through an interface between the first device and the near-real-time radio access network intelligent controller.

In a possible implementation method, the first device includes an RU; and the receiving the second instruction includes: receiving the second instruction from a near-real-time radio access network intelligent controller through an interface between the RU and a DU.

In a possible implementation method, the indication information further indicates a data collection type, and the data collection type is collecting performance data of the first device, collecting performance data and/or network data of a single terminal device, or collecting performance data and/or a network data of a group of terminal devices.

According to a second aspect, an embodiment of this application provides a communication method. The method may be performed by a second device or a module (for example, a chip) in the second device. The method includes: generating a first model; and sending a first instruction to a first device, where the first instruction includes indication information and an identifier of the first model, and the indication information indicates to perform data reporting based on the first model.

In the foregoing solution, the second device indicates the first device to perform data reporting based on the first model, so that the first device determines, based on the first model, whether collected sample data can be reported. Because the first model is obtained through training based on a large amount of sample data, a sample data analysis function of the first model is powerful, which helps improve the data collection efficiency and data collection quality. In addition, analyzing the sample data based on the first model may filter out sample data that does not meet a reporting condition. That is, an output result indicates that the sample data is not to be reported. In this way, the first device reduces the frequency of reporting the sample data that does not meet a requirement, so that the data processing load is reduced, and the data collection efficiency and the data collection quality can be further improved.

In a possible implementation method, the method further includes: receiving sample data from the first device, where the sample data meets a first condition, and the first condition includes at least one of the following: a feature value of at least one service feature in the sample data meets a feature value magnitude requirement; the feature value of the at least one service feature in the sample data meets a reporting periodicity requirement, and the reporting periodicity requirement is related to a degree of variation of the feature value of the service feature within a specified duration; and the feature value of the at least one service feature in the sample data meets a feature value distribution requirement corresponding to the service feature.

In a possible implementation method, the first instruction further includes an identifier of the first device.

In a possible implementation method, the generating the first model includes: receiving a service requirement, where the service requirement indicates at least one of a first feature value magnitude requirement, a quantity of first feature values, a first feature value distribution requirement, or a first reporting periodicity requirement of a to-be-collected service feature, and the first reporting periodicity requirement is related to a degree of variation of a feature value of the service feature within the specified duration; and generating the first model based on the service requirement.

In the foregoing solution, a reporting periodicity of the feature value of the service feature is associated with the degree of variation of the feature value of the service feature within the specified duration, so that the frequency of reporting the feature value can be controlled, which helps reduce a redundancy degree of reported feature values. For example, a smaller degree of variation indicates a higher repetition degree (or redundancy degree) of the feature value of the service feature in a recent period of time. Therefore, the frequency of reporting the feature value is lower (in other words, the reporting periodicity is longer), which helps reduce repeated reporting of a same or similar feature value. In this way, the data collection efficiency and the data collection quality can be improved. In addition, in the foregoing solution, when the feature value of the service feature meets the feature value magnitude requirement or the feature value distribution requirement corresponding to the service feature, the first device may be further controlled to collect an expected feature value, to reduce collection of invalid data (namely, an unexpected feature value). In this way, the data collection efficiency is improved.

In a possible implementation method, the method further includes: determining update information based on the collected sample data and the service requirement, where the update information includes at least one of a second feature value magnitude requirement, a quantity of second feature values, a second feature value distribution requirement, or a second reporting periodicity requirement of the to-be-collected service feature, and the second reporting periodicity requirement is related to the degree of variation of the feature value of the service feature within the specified duration; updating the first model based on the update information, to obtain a second model; and sending file information of the second model to the first device.

In the foregoing solution, the second device may dynamically update the first model based on the collected sample data, to obtain the second model, and indicate the first device to perform data collection by using the second model. This helps report the sample data more accurately, and can improve the data collection efficiency and the data collection quality.

In a possible implementation method, the first device includes a CU or a DU, and the second device includes a near-real-time radio access network intelligent controller; and the sending the first instruction to the first device includes: sending the first instruction to the first device through an interface between the first device and the second device.

In a possible implementation method, the first device includes an RU, and the second device includes a near-real-time radio access network intelligent controller; and the sending the first instruction to the first device includes: sending the first instruction to the first device through an interface between the second device and a DU.

In a possible implementation method, the method further includes: sending a second instruction to the first device, where the second instruction includes file information of the first model.

In a possible implementation method, the first device includes a CU or a DU, and the second device includes a near-real-time radio access network intelligent controller; and the sending the second instruction to the first device includes: sending the second instruction to the first device through an interface between the first device and the second device.

In a possible implementation method, the first device includes an RU, and the second device includes a near-real-time radio access network intelligent controller; and the sending the second instruction to the first device includes: sending the second instruction to the first device through an interface between the second device and a DU.

In a possible implementation method, the indication information further indicates a data collection type, and the data collection type is collecting performance data of the first device, collecting performance data and/or network data of a single terminal device, or collecting performance data and/or a network data of a group of terminal devices.

According to a third aspect, an embodiment of this application provides a communication apparatus. The apparatus may be a first device, or may be a module (for example, a chip) in the first device. The apparatus has a function of implementing any implementation method according to the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a second device, or may be a module (for example, a chip) in the second device. The apparatus has a function of implementing any implementation method according to the second aspect. The function may be implemented by hardware, or may be implemented by hardware executing corresponding software. The hardware or the software includes one or more modules corresponding to the function.

According to a fifth aspect, an embodiment of this application provides a communication apparatus, including a unit or a means configured to perform steps of any implementation method according to the first aspect and the second aspect.

According to a sixth aspect, an embodiment of this application provides a communication apparatus, including a processor and an interface circuit. The processor is configured to: communicate with another apparatus through the interface circuit, and perform any implementation method according to the first aspect and the second aspect. There are one or more processors.

Optionally, the communication apparatus may further include a memory configured to store computer instructions. The memory is coupled to the processor, and the processor executes the computer instructions stored in the memory, to cause the apparatus to perform any implementation method according to the first aspect and the second aspect.

According to a seventh aspect, an embodiment of this application further provides a computer program product. The computer program product includes a computer program or instructions. When the computer program or the instructions are run by a communication apparatus, any implementation method according to the first aspect and the second aspect is performed.

According to an eighth aspect, an embodiment of this application further provides a computer-readable storage medium. The computer-readable storage medium stores instructions. When the instructions are run on a communication apparatus, any implementation method according to the first aspect and the second aspect is performed.

According to a ninth aspect, an embodiment of this application further provides a chip system, including a processor, configured to perform any implementation method according to the first aspect and the second aspect.

According to a tenth aspect, an embodiment of this application further provides a communication system, including a first device configured to perform any implementation method according to the first aspect, and a second device configured to perform any implementation method according to the second aspect.

### BRIEF DESCRIPTION OF DRAWINGS

FIG. 1(a) is a diagram of an architecture of a communication system to which an embodiment of this application is applied;
FIG. 1(b) is a diagram of a network device;
FIG. 2 is a diagram of an architecture;
FIG. 3 is a schematic flowchart of a communication method according to an embodiment of this application;
FIG. 4 is a diagram of an architecture of model-based data collection and reporting;
FIG. 5 is a diagram of a structure of a communication apparatus according to an embodiment of this application; and
FIG. 6 is a diagram of a structure of a communication apparatus according to an embodiment of this application.

### DESCRIPTION OF EMBODIMENTS

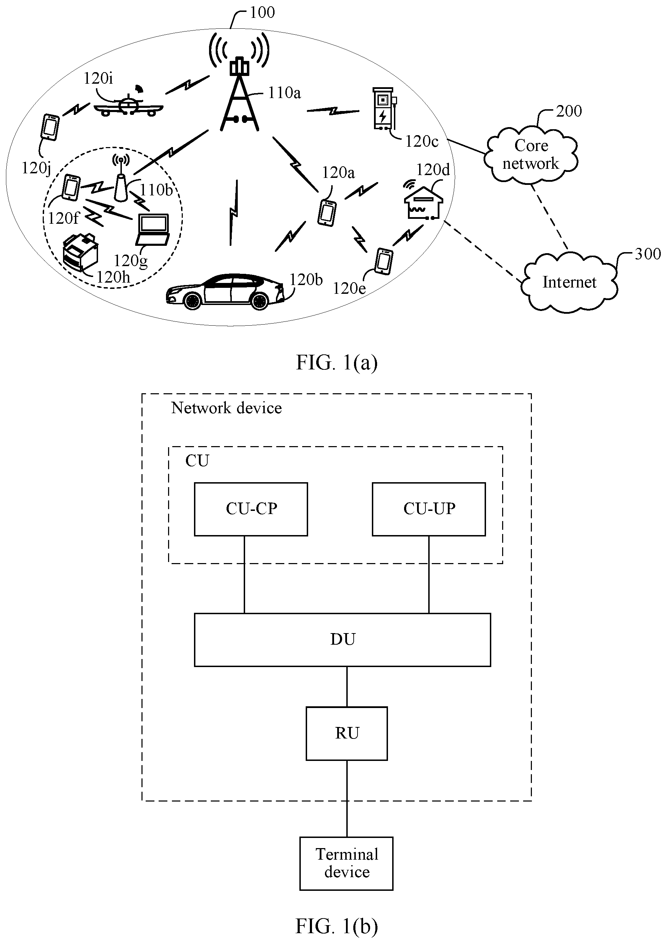

FIG. 1(a) is a diagram of an architecture of a communication system to which an embodiment of this application is applied. The communication system shown in FIG. 1(a) includes a radio access network 100 and a core network 200. Optionally, the communication system further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices that are independent of each other. Alternatively, a function of a core network device and a logical function of the network device may be integrated into a same physical device. Alternatively, some functions of a core network device and some functions of the network device may be integrated into one physical device. Mutual connections between terminal devices and between network devices may be implemented in a wired or wireless manner. FIG. 1(a) is merely a diagram. The communication system may further include other network devices, for example, may further include a wireless relay device and a wireless backhaul device, which are not shown in FIG. 1(a).

The network device is an access device via which the terminal device accesses the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes some functions of a base station, for example, may be a central unit (central unit, CU), a distributed unit (distributed unit, DU), or a radio unit (radio unit, RU). The network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used by the network device are not limited in embodiments of this application.

The terminal device is a device having a wireless transceiver function, and may send a signal to the network device, or receive a signal from the network device. The terminal device includes but is not limited to a terminal apparatus, a terminal, a user equipment (user equipment, UE), a mobile station, a mobile terminal, and the like. The terminal device may be widely used in various scenarios, for example, device-to-device (device-to-device, D2D), vehicle to everything (vehicle to everything, V2X) communication, machine-type communication (machine-type communication, MTC), an internet of things (internet of things, IoT), virtual reality, augmented reality, industrial control, autonomous driving, telemedicine, a smart grid, smart furniture, smart office, smart wearable, smart transportation, and a smart city. The terminal device may be specifically a mobile phone, a tablet computer, a computer having a wireless transceiver function, a wearable device, a vehicle, an airplane, a ship, a robot, a robotic arm, a smart home device, or the like. A specific technology and a specific device form that are used by the terminal device are not limited in embodiments of this application.

The network device and the terminal device may be at fixed positions, or may be movable. The network device and the terminal device may be deployed on land, including indoor or outdoor devices, or handheld or vehicle-mounted devices, may be deployed on water, or may be deployed on an airplane, a balloon, and an artificial satellite. Application scenarios of the network device and the terminal device are not limited in embodiments of this application.

Roles of the network device and the terminal device may be relative. For example, a helicopter or an uncrewed aerial vehicle 120i in FIG. 1(a) may be configured as a mobile network device. For the terminal device 120j that accesses the radio access network 100 via 120i, the terminal device 120i is a network device. However, for the network device 110a, 120i is a terminal device, in other words, 110a and 120i communicate with each other by using a radio air interface protocol. Certainly, 110a and 120i may alternatively communicate with each other by using an interface protocol between network devices. In this case, for 110a, 120i is also a network device. Therefore, both the network device and the terminal device may be collectively referred to as communication apparatuses. 110a and 110b in FIG. 1(a) may be referred to as communication apparatuses having functions of the network device, and 120a to 120j in FIG. 1(a) may be referred to as communication apparatuses having functions of the terminal device. For ease of description, a UE is subsequently used as an example of the terminal device for description in embodiments of this application.

Communication between the network device and the UE, between network devices, and between UEs may be performed through a licensed spectrum, may be performed through an unlicensed spectrum, or may be performed through both a licensed spectrum and an unlicensed spectrum. Communication may be performed through a spectrum below 6 gigahertz (gigahertz, GHz), may be performed through a spectrum above 6 GHz, or may be performed through both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the smart transportation, and the smart city. The function of the UE may alternatively be performed by a module (for example, a chip or a modem) in the UE, or may be performed by an apparatus including the function of the UE.

In this application, the network device sends a downlink signal or downlink information to the UE, where the downlink information is carried on a downlink channel. The UE sends an uplink signal or uplink information to the network device, where the uplink information is carried on an uplink channel. To communicate with the network device, the UE needs to establish a wireless connection with a cell controlled by the network device. The cell that establishes the wireless connection to the UE is referred to as a serving cell of the UE.

FIG. 1(b) is a diagram of a network device. As shown in FIG. 1(b), the network device includes one or more CUs, one or more DUs, and one or more RUs. For clarity, FIG. 1(b) shows only one CU, one DU, and one RU. The CU is configured to be connected to a core network and one or more DUs. Optionally, the CU may have a part of functions of the core network. The CU may include a CU-control plane (control plane, CP) and a CU-user plane (user plane, UP).

The CU and the DU may be configured based on functions of protocol layers of a wireless network that are implemented by the CU and the DU. For example, the CU is configured to implement functions of a packet data convergence protocol (packet data convergence protocol, PDCP) layer and a protocol layer above the PDCP layer (for example, a radio resource control (radio resource control, RRC) layer and/or a service data adaptation protocol (service data adaptation protocol, SDAP) layer), and the DU is configured to implement functions of a protocol layer below the PDCP layer (for example, a radio link control (radio link control, RLC) layer, a medium access control (medium access control, MAC) layer, and/or a physical (physical, PHY) layer). For another example, the CU is configured to implement functions of the protocol layer above the PDCP layer (for example, the RRC layer and/or the SDAP layer), and the DU is configured to implement functions of the PDCP layer and the protocol layer below the PDCP layer (for example, the RLC layer, the MAC layer, and/or the PHY layer).

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have a part of processing functions of protocol layers. For example, a part of functions of the RLC layer and functions of a protocol layer above the RLC layer are set on the CU, and remaining functions of the RLC layer and functions of a protocol layer below the RLC layer are set on the DU. For another example, functions of the CU or the DU may be divided based on a service type or another system requirement, for example, based on latency. A function whose processing time needs to meet a low latency requirement is set on the DU, and a function whose processing time does not need to meet the latency requirement is set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate frequency/radio frequency function. For another example, the DU is configured to implement a higher layer function of the PHY layer, and the RU is configured to implement a lower layer function of the PHY layer or the lower layer function and a radio frequency function. The higher layer function of the physical layer may include a part of functions of the physical layer, and the part of functions are closer to the MAC layer. The lower layer function of the physical layer may include another part of functions of the physical layer, and the part of functions are closer to an intermediate frequency/radio frequency side.

The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). In different systems, the CU, the DU, or the RU may alternatively have different names, but a person skilled in the art may understand meanings of the names. For example, in an open radio access network (open radio access network, ORAN) system, the CU may also be referred to as an O-CU (open CU), the DU may also be referred to as an O-DU, and the RU may also be referred to as an O-RU. Any one of the CU (or the CU-CP and the CU-UP), the DU, and the RU in this application may be implemented via a software module, a hardware module, or a combination of a software module and a hardware module.

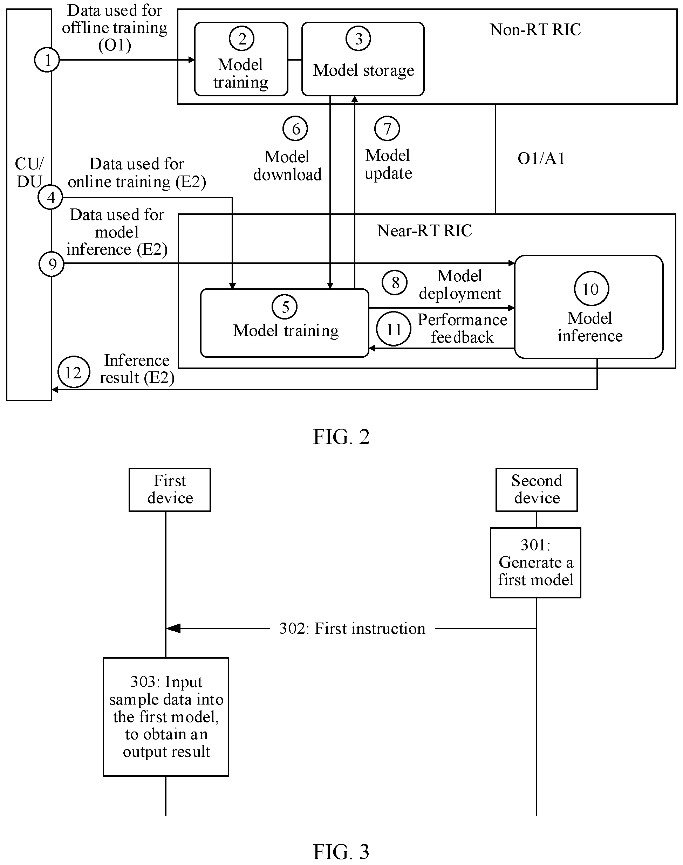

FIG. 2 is a diagram of an architecture. The architecture includes a CU/DU, a non-real-time radio access network intelligent controller (Non-Real-time RAN Intelligent Controller, Non-RT RIC), and a near-real-time radio access network intelligent controller (Near-real-time RAN Intelligent Controller, Near-RT RIC).

The CU/DU is configured to collect data (for example, including CU/DU data, RU data, or UE data), and report the data to the Non-RT RIC and/or the Near-RT RIC.

The Non-RT RIC is a logical function, supports non-real-time artificial intelligence model training, stores file information of a trained model, and provides the file information of the trained model for the Near-RT RIC. In specific implementation, the Non-RT RIC and the CU/DU may be deployed on different physical entities, or may be deployed on a same physical entity.

The Near-RT RIC is also a logical function, supports real-time artificial intelligence model training, and can perform inference by using an artificial intelligence model. In specific implementation, the Near-RT RIC and the CU/DU may be deployed on different physical entities, or may be deployed on a same physical entity. A main objective of the Near-RT RIC is to enhance and automate RAN management and optimization by introducing machine learning and artificial intelligence algorithms.

In embodiments of this application, the artificial intelligence model may also be referred to as a machine learning (Machine Learning, ML) model. For ease of description, the artificial intelligence model is subsequently referred to as a model for short.

Refer to FIG. 2. The architecture may include at least one of the following operations:
(1) The CU/DU collects data used for offline training, and sends the data used for offline training to the Non-RT RIC through an O1 interface.
(2) The Non-RT RIC performs non-real-time offline training based on the data used for offline training, to obtain a trained model.
(3) The Non-RT RIC stores file information of the model obtained through training.
(4) The CU/DU collects data used for online training, and sends the data used for online training to the Near-RT RIC through an E2 interface.
(5) The Near-RT RIC performs real-time online training based on the data used for online training, to obtain a trained model.
(6) The Near-RT RIC downloads the model from the Non-RT RIC, so that the Near-RT RIC can perform real-time online training based on the downloaded model and the collected data used for online training.
(7) The Near-RT RIC updates file information of the model obtained through online training to the Non-RT RIC for storage.
(8) The Near-RT RIC deploys the model for model inference.
(9) The CU/DU collects data used for model inference, and sends the data used for model inference to the Near-RT RIC through the E2 interface.
(10) The Near-RT RIC obtains an inference result based on the input data used for model inference.
(11) The Near-RT RIC performs performance feedback after model inference.
(12) The Near-RT RIC sends the inference result to the CU/DU through the E2 interface.

In the wireless communication field, in more and more application scenarios, data analysis needs to be performed based on collected massive data, and a corresponding operation is performed based on a data analysis result. For example, network load balancing is performed based on the data analysis result. However, how to improve the data collection efficiency and data collection quality remains to be resolved.

In existing technologies, a condition (Condition)-based measurement manner is used. Specifically, a data usage device (for example, the Near-RT RIC or the Non-RT RIC) sends a data collection instruction to a data collection device (for example, the CU/DU/RU). The instruction includes a data filtering condition, and the data filtering condition indicates to report collected data when the data reaches a specific threshold. For example, when signal strength is lower than a specific threshold or a moving speed of a UE exceeds a preset value, the data collection device reports the data. This method may not be flexible and efficient in dealing with complex scenarios and dynamic network environments.

To resolve this problem, this application provides corresponding embodiments. The following provides detailed descriptions.

FIG. 3 is a schematic flowchart of a communication method according to an embodiment of this application. The method is performed by a first device or a module (for example, a chip) in the first device, and a second device or a module (for example, a chip) in the second device. The following uses an example in which the first device and the second device perform the method for description. The first device may be a CU, a DU, an RU, a base station, or another type of device. The second device may be a near-real-time radio access network intelligent controller or another type of device (for example, a network data analysis function (network data analysis function, NWDAF) network element) that needs to obtain data. Types of the first device and the second device are not limited in this application.

The method includes the following steps:
Step 301: The second device generates a first model.

For example, the second device receives a service requirement from a service application, and then the second device generates the first model based on the service requirement. The service requirement indicates at least one of a first feature value magnitude requirement, a quantity of first feature values, a first feature value distribution requirement, or a first reporting periodicity requirement of a to-be-collected service feature. The service application may be a service application in the second device. For example, a visual interface is installed on the second device, and a network administrator performs an operation on the service application on the visual interface, to trigger the service application to send the service requirement. The service application may alternatively be a service application outside the second device.

For example, when the service application needs to perform cell-level handover optimization, cell-level load balancing, or user-group-level live broadcast optimization, the service application may send the service requirement.

For example, the service feature includes one or more of the following: performance data of the first device, measurement data of a single UE, or measurement data of a group of UEs. When the first device includes a CU or a DU, the performance data of the first device includes one or more of the following: coverage strength, coverage quality, quantity of handovers, throughput rate, quantity of access attempts, or quantity of call drops. When the first device includes an RU, the performance data of the first device includes one or more of the following: transmit power, receive level, noise floor, or bit error rate. The measurement data of the single UE includes one or more of the following: throughput rate, traffic volume, and quantity of handovers. The measurement data of the group of UEs includes one or more of the following: throughput rate, traffic volume, and quantity of handovers. The quantity of handovers is a quantity of times the single UE hands over to or hands over from the first device.

The first feature value may be understood as a value of a specific service feature. For example, when the service feature is a quantity of handovers, the first feature value of the service feature is a value of a quantity of times a UE hands over to the first device. Others are similar, and details are not described again.

The first feature value magnitude requirement of the service feature indicates a requirement that a magnitude of a feature value of the service feature needs to meet. For example, the feature value of the service feature needs to be greater than a feature value threshold. In the method, when a feature value of a service feature meets the feature value magnitude requirement corresponding to the service feature, the first device is controlled to collect an expected feature value, to reduce collection of invalid data (namely, an unexpected feature value). In this way, data collection efficiency is improved.

The quantity of first feature values of the service feature indicates a requirement on a quantity of feature values of the service feature. For example, the requirement on the quantity of feature values of the service feature is 500. In the method, when a feature value of a service feature meets the feature value quantity requirement corresponding to the service feature, the first device is controlled to collect an expected feature value, to reduce collection of invalid data (namely, an unexpected feature value). In this way, the data collection efficiency is improved.

The first feature value distribution requirement of the service feature indicates a relationship between a feature value magnitude of the service feature and a feature value quantity of the service feature. For example, the first feature value distribution requirement is a normal distribution requirement. For another example, for feature values of the service feature, 100 feature values ranging from 1 to 50 are needed, 150 feature values ranging from 50 to 100 are needed, and 50 feature values ranging from 100 to 150 are needed. In the method, when a feature value of a service feature meets the feature value distribution requirement corresponding to the service feature, the first device is controlled to collect an expected feature value, to reduce collection of invalid data (namely, an unexpected feature value). In this way, the data collection efficiency is improved.

The first reporting periodicity requirement of the service feature indicates a reporting periodicity of the feature value of the service feature, and the first reporting periodicity requirement of the service feature is related to a degree of variation of the feature value of the service feature within a specified duration. For example, the degree of variation of the feature value of the service feature within the specified duration may be a variance, a mean absolute error (Mean Absolute Error, MAE, an autocorrelation coefficient (Autocorrelation Coefficient), a signal-to-noise ratio (Signal-to-Noise Ratio, SNR), or peak detection (Peak Detection). The following separately describes the several implementation methods.
(1) The degree of variation of the feature value of the service feature within the specified duration is a variance.
   The variance may measure a deviation degree between data points and an average value, and reflect data fluctuation magnitude. A high variance means that the data points are distributed in a wide range, and a low variance means that the data points are concentrated. This method is applicable to a scenario in which data fluctuation needs to be monitored. For example, during monitoring of a network key performance indicator (key performance indicator, KPI) and a temperature, if the temperature fluctuates greatly (a high variance), data may need to be collected more frequently to capture these changes.
(2) The degree of variation of the feature value of the service feature within the specified duration is a mean absolute error.
   The mean absolute error is the average of absolute values of differences between observed values and an average value of the observed values. The mean absolute error measures the data fluctuation in another way, and is less affected by an outlier than the variance. This method is applicable to a case in which data may include an outlier but fluctuation magnitude of the data still needs to be measured. The mean absolute error may help filter out an abnormal fluctuation, to focus on a more stable trend change.
(3) The degree of variation of the feature value of the service feature within the specified duration is an autocorrelation coefficient.
   The autocorrelation coefficient measures a correlation between adjacent data points in a sequence. High autocorrelation means that current data is highly similar to previous data, and low autocorrelation means that the data points are independent of each other. This method is applicable to time series data analysis, for example, scenarios such as wireless channel measurement and meteorological data analysis. In these scenarios, if data shows high autocorrelation, collection frequency can be reduced without losing important information.
(4) The degree of variation of the feature value of the service feature within the specified duration is a signal-to-noise ratio.
   The signal-to-noise ratio measures a ratio of strength of a useful signal to noise floor. A high signal-to-noise ratio means that the signal is clear and discernible, and a low signal-to-noise ratio may mean that the signal is submerged by the noise. This method is applicable to signal collection in noise environments, for example, scenarios such as audio signal processing and wireless air interfaces. When the signal-to-noise ratio is low, a technical means may need to be used to improve signal quality or increase collection frequency, to ensure signal availability.
(5) The degree of variation of the feature value of the service feature within the specified duration is peak detection.
   The peak detection aims to identify a maximum point in data, which is especially important for capturing an instantaneous event. This method is applicable to a scenario in which key information in data is reflected on a peak, for example, a radio frequency power amplifier. In these applications, timely and accurate detection of the peak is critical for data analysis and decision-making.

In a specific example, if the variance of the feature value of the service feature in last 10 seconds is D1, the reporting periodicity is T1. If the variance of the feature value of the service feature in last 10 seconds is D2, the reporting periodicity is T2. If the variance of the feature value of the service feature in last 10 seconds is D3, the reporting periodicity is T3. The rest can be deduced by analogy. In addition, the variance is inversely proportional to the reporting periodicity. To be specific, the smaller the variance, the longer the reporting periodicity; and the larger the variance, the shorter the reporting periodicity. For example, a smaller variance indicates a higher repetition degree (or redundancy degree) of the feature value of the service feature in a recent period of time. Therefore, the frequency of reporting the feature value is lower, which helps reduce repeated reporting of a same or similar feature value. In this way, the data collection efficiency and data collection quality can be improved. According to the method, the reporting periodicity of the feature value of the service feature is associated with the degree of variation of the feature value of the service feature within the specified duration, so that the frequency of reporting the feature value can be controlled, which helps reduce a redundancy degree of reported feature values.

It should be noted that the second device may receive, from one service application, a service requirement corresponding to one or more service features, or may receive, from a plurality of service applications, service requirements corresponding to a plurality of service features. For example, the second device receives, from a service application 1, a service requirement 1 corresponding to a service feature 1 and a service requirement 2 corresponding to a service feature 2, and receives, from a service application 2, a service requirement 3 corresponding to a service feature 3.

For example, when the service requirement includes the first feature value magnitude requirement of the service feature, the quantity of first feature values of the service feature, or the first feature value distribution requirement of the service feature, the first model generated based on the service requirement may be a deep neural network (Deep Neural Network, DNN) model or the like, or it is understood as that the first model is any other model having a function of the DNN model.

For example, when the service requirement includes the first reporting periodicity requirement of the service feature, the first model generated based on the service requirement may be a time series model. The time series model may be, for example, a recursive neural network (Recursive Neural Network, RNN) model or a long short-term memory (Long short-term memory, LSTM) model, or it is understood as that the first model has a function of the RNN model or the LSTM model.

Step 302: The second device sends a first instruction to the first device. Correspondingly, the first device receives the first instruction.

The first instruction includes indication information and an identifier of the first model, the identifier of the first model is used to identify the first model, and the indication information indicates to perform data reporting based on the first model.

For example, the indication information further indicates a data collection type, and the data collection type indicates a source and/or a type of collected data. For example, the data collection type indicates collecting performance data of the first device, collecting performance data and/or network data of a single UE, or collecting performance data and/or a network data of a group of UEs.

Optionally, the first instruction further includes an identifier of the first device, and the first instruction indicates the first device to perform data collection and reporting.

For example, if the second device is a near-real-time radio access network intelligent controller, and the first device includes a CU, the second device may send the first instruction to the CU through an interface between the near-real-time radio access network intelligent controller and the CU. If the second device is a near-real-time radio access network intelligent controller, and the first device includes a DU, the second device may send the first instruction to the DU through an interface between the near-real-time radio access network intelligent controller and the DU. If the second device is a near-real-time radio access network intelligent controller, and the first device includes an RU, the second device may send the first instruction to a DU through an interface between the near-real-time radio access network intelligent controller and the DU, and then the DU forwards the first instruction to the RU through an interface between the DU and the RU.

In an implementation method, the first instruction further includes file information of the first model. For example, the file information of the first model includes network structure information, weight information, and the like of the first model. The network structure information indicates an association relationship between nodes in the first model. The weight information indicates weight values between different nodes. The first device may determine complete information of the first model based on the network structure information and the weight information, that is, determine the first model that can be used. Subsequently, the first device may determine, by using the first model, whether to report collected sample data.

In another implementation method, the second device may send a second instruction to the first device before or after step 302, where the second instruction includes the file information of the first model. For specific content of the file information of the first model, refer to the foregoing descriptions.

In other words, the second device may notify the first device of the file information of the first model in different manners, or another manner may be used. Details are not described again in this application.

For example, for a sending manner of the second instruction, refer to a sending manner of the first instruction. Details are not described again.

In an implementation method, if the embodiment of FIG. 3 is applied to a scenario shown in FIG. 2, the first device includes a CU, a DU, or an RU, and the second device is a Near-RT RIC, the first instruction may be a control instruction in a subscription program (for example, a ric subscription procedure). The control instruction includes a model identifier (ID) and a RIC style type (style Type). The RIC style type is a specific example of the foregoing indication information.

For example, when the first instruction is a control instruction in the ric subscription procedure, a manner of carrying the model identifier in the control instruction may be modifying label information or test information in the control instruction to the model identifier.

For example, the RIC style Type may be, for example, any one of the following:
(1) Model-based E2 node measurement (Model-based E2 Node Measurement)
   This type represents that an E2 node (namely, the CU and/or the CU) collects and reports sample data based on a model, and indicates to measure performance and a status of the E2 node. This type of measurement is used to evaluate overall health and performance of the E2 node, to optimize network performance and resource utilization.
(2) Model-based E2 node measurement for a single UE (Model-based E2 Node Measurement for a single UE)
   This type represents that an E2 node collects and reports sample data based on a model, and indicates to measure device performance and a status of the single UE. This type of measurement is used to diagnose the UE and optimize user experience.
(3) Model-based UE-level E2 node measurement (Model-based UE-level E2 Node Measurement)
   This type represents that an E2 node collects and reports sample data based on a model, and indicates to measure UE-level network performance. This type of measurement is used to optimize a network status and resource usage of a UE.
(4) Common model-based UE-level E2 Node Measurement (Common Model-based UE-level E2 Node Measurement)
   This type represents that an E2 node collects and reports sample data based on a model, and indicates to measure condition information that affects a UE level. This type of measurement is used to resolve a network problem that has a wide impact on user experience.
(5) Model-based E2 node measurement for multiple UEs (Model-based E2 Node Measurement for multiple UEs)
   This type represents that an E2 node collects and reports sample data based on a model, and indicates to measure device performance and statuses of a plurality of UEs. This type of measurement is used to obtain a more comprehensive view of network interaction and performance from a perspective of a group of UEs, to analyze trends, identify common problems, and optimize network performance of a plurality of users.

Step 303: The first device inputs the sample data into the first model, to obtain an output result, where the output result indicates to report or not to report the sample data.

The sample data includes a feature value of one or more service features. For example, the first device collects feature values of N service features, and generates sample data based on the collected feature values in a predefined format of the sample data, where the sample data includes the feature values of the N service features, and N is a positive integer. The format of the sample data defines feature values of specific service features included in the sample data and an arrangement order of feature values of different service features. For example, N=3. Sample data 1 is generated at a moment T1, and the sample data 1 sequentially includes a feature value 1 of the service feature 1, a feature value 1 of the service feature 2, and a feature value 1 of the service feature 3. Sample data 2 is generated at a moment T2, and the sample data 2 sequentially includes a feature value 2 of the service feature 1, a feature value 2 of the service feature 2, and a feature value 2 of the service feature 3. Sample data 3 is generated at a moment T3, and the sample data 3 sequentially includes a feature value 3 of the service feature 1, a feature value 3 of the service feature 2, and a feature value 3 of the service feature 3. The rest can be deduced by analogy. For example, the service feature 1, the service feature 2, and the service feature 3 are respectively coverage strength of the CU, coverage quality of the CU, and a throughput rate of the CU. For another example, the service feature 1, the service feature 2, and the service feature 3 are respectively transmit power of the RU, a receive level of the RU, and noise floor of the RU.

After collecting the sample data, the first device may input, each time receiving one piece of sample data, the sample data into the first model, to obtain an output result, may input, after receiving a specified quantity of pieces (for example, 100 pieces) of sample data, the sample data into the first model, to obtain an output result, namely, an output result corresponding to each piece of sample data, or may input the collected sample data into the first model at regular intervals (for example, 10 seconds), to obtain an output result, namely, an output result corresponding to each piece of sample data.

When the output result indicates to report the sample data, the first device sends the sample data to the second device. When the output result indicates not to report the sample data, the first device does not report the sample data. For example, the first device may discard the sample data.

In an implementation method, after sample data is input into the first model, if the sample data meets a first condition, an output result of the first model indicates to report the sample data, where the first condition includes at least one of the following:
(1) A feature value of at least one service feature in the sample data meets a first feature value magnitude requirement of the service feature.

In an implementation method, when a feature value of any service feature in the sample data meets a first feature value magnitude requirement of the service feature, it indicates that the sample data includes a valid feature value. Therefore, the sample data meets the first condition. The sample data 1 is used as an example. If the feature value 1 of the service feature 1 in the sample data 1 is greater than a feature value threshold corresponding to the service feature 1, the sample data 1 meets the first condition. Alternatively, if the feature value 1 of the service feature 2 in the sample data 1 is greater than a feature value threshold corresponding to the service feature 2, the sample data 1 meets the first condition. Alternatively, if the feature value 1 of the service feature 3 in the sample data 1 is greater than a feature value threshold corresponding to the service feature 3, the sample data 1 meets the first condition.

In another implementation method, when feature values of any two service features in the sample data meet first feature value magnitude requirements of the service features, it indicates that the sample data includes at least two valid feature values. Therefore, the sample data meets the first condition. In comparison with the foregoing method in which only one feature value in the sample data needs to meet the first feature value magnitude requirement of the service feature, the method is more strict in determining whether the first condition is met. Correspondingly, less sample data that meets the first condition is selected. The sample data 1 is used as an example. If the feature value 1 of the service feature 1 in the sample data 1 is greater than a feature value threshold corresponding to the service feature 1, and the feature value 1 of the service feature 2 in the sample data 1 is greater than a feature value threshold corresponding to the service feature 2, the sample data 1 meets the first condition. Alternatively, if the feature value 1 of the service feature 1 in the sample data 1 is greater than a feature value threshold corresponding to the service feature 1, and the feature value 1 of the service feature 3 in the sample data 1 is greater than a feature value threshold corresponding to the service feature 3, the sample data 1 meets the first condition. Alternatively, if the feature value 1 of the service feature 2 in the sample data 1 is greater than a feature value threshold corresponding to the service feature 2, and the feature value 1 of the service feature 3 in the sample data 1 is greater than a feature value threshold corresponding to the service feature 3, the sample data 1 meets the first condition.

Certainly, it may alternatively be specified that when feature values of any three or more service features in the sample data meet first feature value magnitude requirements of the service features, the sample data meets the first condition. The sample data 1 is used as an example. If the feature value 1 of the service feature 1 in the sample data 1 is greater than a feature value threshold corresponding to the service feature 1, the feature value 1 of the service feature 2 in the sample data 1 is greater than a feature value threshold corresponding to the service feature 2, and the feature value 1 of the service feature 3 in the sample data 1 is greater than a feature value threshold corresponding to the service feature 3, the sample data 1 meets the first condition.

(2) A feature value of at least one service feature in the sample data meets a first reporting periodicity requirement of the service feature.

The first reporting periodicity requirement of the service feature is related to a degree of variation of the feature value of the service feature within the specified duration. For example, if a variance of a feature value of a specific service feature in last 10 seconds is D1, a reporting periodicity is T1, in other words, the feature value of the service feature 1 is reported every T1 duration. If a variance of a feature value of a specific service feature in last 10 seconds is D2, a reporting periodicity is T2, in other words, the feature value of the service feature 2 is reported every T2 duration. The rest can be deduced by analogy.

In an implementation method, when a feature value of any service feature in the sample data meets a first reporting periodicity requirement of the service feature, it indicates that the sample data includes a valid feature value. Therefore, the sample data meets the first condition. The sample data 1 is used as an example. If the feature value 1 of the service feature 1 in the sample data 1 meets a first reporting periodicity requirement of the service feature 1, the sample data 1 meets the first condition. Alternatively, if the feature value 1 of the service feature 2 in the sample data 1 meets a first reporting periodicity requirement of the service feature 2, the sample data 1 meets the first condition. Alternatively, if the feature value 1 of the service feature 3 in the sample data 1 meets a first reporting periodicity requirement of the service feature 3, the sample data 1 meets the first condition.

In another implementation method, when feature values of any two service features in the sample data meet first reporting periodicity requirements of the service features, it indicates that the sample data includes at least two valid feature values. Therefore, the sample data meets the first condition. In comparison with the foregoing method in which only one feature value in the sample data needs to meet the first feature value magnitude requirement of the service feature, the method is more strict in determining whether the first condition is met. Correspondingly, less sample data that meets the first condition is selected. The sample data 1 is used as an example. If the feature value 1 of the service feature 1 in the sample data 1 meets a first reporting periodicity requirement of the service feature 1, and the feature value 1 of the service feature 2 in the sample data 1 meets a first reporting periodicity requirement of the service feature 2, the sample data 1 meets the first condition. Alternatively, if the feature value 1 of the service feature 1 in the sample data 1 meets a first reporting periodicity requirement of the service feature 1, and the feature value 1 of the service feature 3 in the sample data 1 meets a first reporting periodicity requirement of the service feature 3, the sample data 1 meets the first condition. Alternatively, if the feature value 1 of the service feature 2 in the sample data 1 meets a first reporting periodicity requirement of the service feature 2, and the feature value 1 of the service feature 3 in the sample data 1 meets a first reporting periodicity requirement of the service feature 3, the sample data 1 meets the first condition.

Certainly, it may alternatively be specified that when feature values of any three or more service features in the sample data meet first reporting periodicity requirements of the service features, the sample data meets the first condition. The sample data 1 is used as an example. If the feature value 1 of the service feature 1 in the sample data 1 meets a first reporting periodicity requirement of the service feature 1, the feature value 1 of the service feature 2 in the sample data 1 meets a first reporting periodicity requirement of the service feature 2, and the feature value 1 of the service feature 3 in the sample data 1 meets a first reporting periodicity requirement of the service feature 3, the sample data 1 meets the first condition.

(3) A feature value of at least one service feature in the sample data meets a first feature value distribution requirement of the service feature.

For example, it is assumed that for a specific service feature, 100 feature values ranging from 1 to 50 are needed, 150 feature values ranging from 50 to 100 are needed, and 50 feature values ranging from 100 to 150 are needed. If a quantity of reported feature values of the service feature has been met, a feature value of the service feature in newly collected sample data does not meet the first feature value distribution requirement. For example, for the service feature 1, a quantity of reported feature values ranging from 1 to 50 has reached 100, and a feature value of the service feature 1 in subsequently collected sample data is 45. In this case, the feature value does not meet a first feature value distribution requirement.

In an implementation method, when a feature value of any service feature in the sample data meets a first feature value distribution requirement of the service feature, it indicates that the sample data includes a valid feature value. Therefore, the sample data meets the first condition. The sample data 1 is used as an example. If the feature value 1 of the service feature 1 in the sample data 1 meets the first feature value distribution requirement of the service feature 1, the sample data 1 meets the first condition. Alternatively, if the feature value 1 of the service feature 2 in the sample data 1 meets a first feature value distribution requirement of the service feature 2, the sample data 1 meets the first condition. Alternatively, if the feature value 1 of the service feature 3 in the sample data 1 meets a first feature value distribution requirement of the service feature 3, the sample data 1 meets the first condition.

In another implementation method, when feature values of any two service features in the sample data meet first feature value distribution requirements of the service features, it indicates that the sample data includes at least two valid feature values. Therefore, the sample data meets the first condition. In comparison with the foregoing method in which only one feature value in the sample data needs to meet the first feature value magnitude requirement of the service feature, the method is more strict in determining whether the first condition is met. Correspondingly, less sample data that meets the first condition is selected. The sample data 1 is used as an example. If the feature value 1 of the service feature 1 in the sample data 1 meets the first feature value distribution requirement of the service feature 1, and the feature value 1 of the service feature 2 in the sample data 1 meets a first feature value distribution requirement of the service feature 2, the sample data 1 meets the first condition. Alternatively, if the feature value 1 of the service feature 1 in the sample data 1 meets the first feature value distribution requirement of the service feature 1, and the feature value 1 of the service feature 3 in the sample data 1 meets a first feature value distribution requirement of the service feature 3, the sample data 1 meets the first condition. Alternatively, if the feature value 1 of the service feature 2 in the sample data 1 meets a first feature value distribution requirement of the service feature 2, and the feature value 1 of the service feature 3 in the sample data 1 meets a first feature value distribution requirement of the service feature 3, the sample data 1 meets the first condition.

Certainly, it may alternatively be specified that when feature values of any three or more service features in the sample data meet first feature value distribution requirements of the service features, the sample data meets the first condition. The sample data 1 is used as an example. If the feature value 1 of the service feature 1 in the sample data 1 meets the first feature value distribution requirement of the service feature 1, the feature value 1 of the service feature 2 in the sample data 1 meets a first feature value distribution requirement of the service feature 2, and the feature value 1 of the service feature 3 in the sample data 1 meets a first feature value distribution requirement of the service feature 3, the sample data 1 meets the first condition.

In an implementation method, if a feature value of at least one service feature in the sample data meets a first feature value magnitude requirement of the service feature, the sample data meets the first condition. Therefore, an output result obtained after the sample data is input into the first model indicates the sample data.

In another implementation method, if a feature value of at least one service feature in the sample data meets a first reporting periodicity requirement of the service feature, the sample data meets the first condition. Therefore, an output result obtained after the sample data is input into the first model indicates the sample data.

In another implementation method, if a feature value of at least one service feature in the sample data meets a first feature value distribution requirement of the service feature, the sample data meets the first condition. Therefore, an output result obtained after the sample data is input into the first model indicates the sample data.

In another implementation method, if a feature value of at least one service feature in the sample data meets a first feature value magnitude requirement of the service feature, and a feature value of at least one service feature in the sample data meets a first reporting periodicity requirement of the service feature, the sample data meets the first condition. Therefore, an output result obtained after the sample data is input into the first model indicates the sample data.

In another implementation method, if a feature value of at least one service feature in the sample data meets a first feature value magnitude requirement of the service feature, and a feature value of at least one service feature in the sample data meets a first feature value distribution requirement of the service feature, the sample data meets the first condition. Therefore, an output result obtained after the sample data is input into the first model indicates the sample data.

In another implementation method, if a feature value of at least one service feature in the sample data meets a first reporting periodicity requirement of the service feature, and a feature value of at least one service feature in the sample data meets a first feature value distribution requirement of the service feature, the sample data meets the first condition. Therefore, an output result obtained after the sample data is input into the first model indicates the sample data.

In another implementation method, if a feature value of at least one service feature in the sample data meets a first feature value magnitude requirement of the service feature, a feature value of at least one service feature in the sample data meets a first reporting periodicity requirement of the service feature, and a feature value of at least one service feature in the sample data meets a first feature value distribution requirement of the service feature, the sample data meets the first condition. Therefore, an output result obtained after the sample data is input into the first model indicates the sample data.

In an implementation method, the second device may determine update information based on the received sample data and the service requirement from the service application, and the second device updates the first model based on the update information, to obtain a second model. The second device sends file information of the second model to the first device. The update information includes at least one of a second feature value magnitude requirement, a quantity of second feature values, a second feature value distribution requirement, or a second reporting periodicity requirement of the to-be-collected service feature, and the second reporting periodicity requirement is related to the degree of variation of the feature value of the service feature within the specified duration. For example, for the received sample data and for each feature in the sample data, the second device divides a value range of the feature into feature value intervals, determines, based on a received feature value in each feature value interval, an entropy value corresponding to each feature value interval, determines, based on the entropy value corresponding to each feature value interval, a redundancy degree of each feature value interval, and determines the update information based on the entropy value corresponding to each feature value interval and the service requirement.

In an implementation method, the first device includes a CU, and sample data collected by the CU may be from at least one of the CU, an RU, or a UE. The CU determines, based on the first model, whether to report the sample data. If determining to report the sample data, the CU reports the sample data to the second device.

In another implementation method, the first device includes a DU, and sample data collected by the DU may be from at least one of the DU, an RU, or a UE. The DU determines, based on the first model, whether to report the sample data. If determining to report the sample data, the DU reports the sample data to the second device.

In another implementation method, the first device includes an RU, and sample data collected by the RU may be from the RU and/or a UE. The RU determines, based on the first model, whether to report the sample data. If determining to report the sample data, the RU reports the sample data to a DU, and then the DU forwards the sample data to the second device.

In the foregoing solution, the first device determines, based on the first model, whether the collected sample data can be reported. Because the first model is obtained through training based on a large amount of sample data, a sample data analysis function of the first model is powerful, which helps improve the data collection efficiency and the data collection quality. In addition, analyzing the sample data based on the first model may filter out sample data that does not meet a reporting condition. That is, an output result indicates that the sample data is not to be reported. In this way, the first device reduces the frequency of reporting the sample data that does not meet a requirement, so that the data processing load is reduced, and the data collection efficiency and the data collection quality can be further improved. In addition, such a data collection solution is flexible and efficient.

More specifically, in comparison with a condition-based measurement manner, a model-based measurement method introduces a model to replace conventional conditional judgment logic. A core advantage of the method is that the method can use a large amount of historical data to learn and identify best time and conditions for data reporting, to implement more intelligent and adaptive network management. The following provides some advantages of the model-based measurement method:

First, a capability of processing complex logic. The model can process more complex logic and patterns than conventional conditional judgment, including non-linear relationships and multi-variable interactions. In this way, the model can make more accurate judgment in changeable network conditions and complex user behavior patterns.

Second, adaptive feature distribution. The model-based method can automatically adjust a reporting policy based on feature distribution of collected samples, making data reporting more efficient. Especially when a network status changes rapidly, the model can identify a feature that has the greatest impact on network performance, and optimize a data collection and reporting process based on the feature.

Third, time series model support. By introducing a time series model, for example, an RNN model or an LSTM model, the model-based measurement method can consider a trend of data over time, and provide support for data reporting based on a degree of variation. This means that a system can dynamically adjust reporting frequency and granularity based on a data changing rate and pattern.

Fourth, dynamic optimization. The model can continuously learn from new data and optimize judgment criteria of the model, so that the model-based measurement method can adapt to long-term changes of network conditions and new usage patterns, to implement continuous performance optimization.

Fifth, personalization and granularity control. The model-based method can provide personalized measurement and reporting policies for different UEs, service types, or network conditions, to implement fine-grained network management and optimization.

In conclusion, in comparison with the conventional condition-based method, the model-based measurement method presents greater inventiveness and novelty in processing complex network environments, implementing adaptive network management, and optimizing the data collection and reporting process. This method can provide a more efficient and flexible solution for an intelligent radio access network.

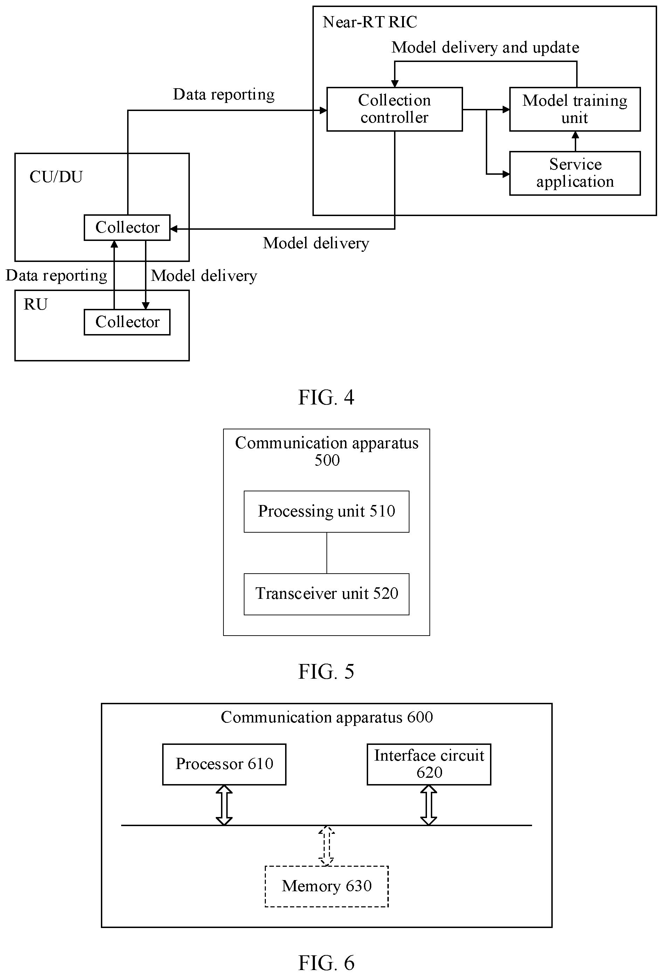

The following describes the embodiment of FIG. 3 with reference to a specific example in FIG. 4.

FIG. 4 is a diagram of an architecture of model-based data collection and reporting. A Near-RT RIC includes a collection controller, a model training unit, and a service application, a CU includes a collector, a DU includes a collector, and an RU includes a collector.

Data collection and reporting mainly include the following operations:
(1) A service application sends a service requirement to the model training unit, where the service requirement indicates a feature value needed by the service application.
   For a meaning of the service requirement, refer to the descriptions in step 301.
(2) The model training unit generates a first model based on the service requirement, and sends file information of the first model to the collection controller.
(3) The collection controller sends the file information of the first model to the CU/DU, and the DU may further forward the file information of the first model to the RU.
(4) When the CU/DU receives a first instruction from the Near-RT RIC, if the first instruction indicates that the CU/DU collects and reports data, the CU/DU collects sample data based on the first model, and sends sample data that meets a first condition to the collection controller of the Near-RT RIC. If the first instruction indicates that the RU collects and reports data, the DU forwards the first instruction to the RU, the RU collects sample data based on the first model, and sends sample data that meets a first condition to the DU, and then the DU sends the sample data to the collection controller of the Near-RT RIC.
   The collection controller sends, to the service application, a feature value of a service feature that is in the sample data and that is related to the service application, and the collection controller may further send the sample data to the model training unit.
(5) The model training unit may determine, based on the collected sample data and the first model, whether the first model needs to be updated. If a second model is obtained through update, file information of the second model may be sent to the CU/DU via the collection controller. The DU may further forward the file information of the second model to the RU.

It may be understood that, to implement functions in the foregoing embodiments, the first device or the second device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of technical solutions.

FIG. 5 and FIG. 6 are diagrams of structures of possible communication apparatuses according to embodiments of this application. The communication apparatuses may be configured to implement functions of the first device or the second device in the foregoing method embodiment, and therefore can also implement beneficial effects of the foregoing method embodiment. In embodiments of this application, the communication apparatus may be the first device or the second device, or may be a module (for example, a chip) used in the first device or the second device.

The communication apparatus 500 shown in FIG. 5 includes a processing unit 510 and a transceiver unit 520. The communication apparatus 500 is configured to implement functions of the first device or the second device in the foregoing method embodiment.

When the communication apparatus 500 is configured to implement the function of the first device in the foregoing method embodiment, the transceiver unit 520 is configured to receive a first instruction, where the first instruction includes indication information and an identifier of a first model, and the indication information indicates to perform data reporting based on the first model; and the processing unit 510 is configured to input collected sample data into the first model, to obtain an output result, where the output result indicates to report or not to report the sample data.

In a possible implementation method, when the sample data meets a first condition, the output result indicates to report the sample data, and the first condition includes at least one of the following: a feature value of at least one service feature in the sample data meets a feature value magnitude requirement; the feature value of the at least one service feature in the sample data meets a reporting periodicity requirement, and the reporting periodicity requirement is related to a degree of variation of the feature value of the service feature within a specified duration; and the feature value of the at least one service feature in the sample data meets a feature value distribution requirement corresponding to the service feature.

In a possible implementation method, the degree of variation of the feature value of the service feature within the specified duration includes a variance, a mean absolute error, an autocorrelation coefficient, a signal-to-noise ratio, or peak detection of the feature value of the service feature within the specified duration.

In a possible implementation method, the service feature includes one or more of the following: performance data of the first device, measurement data of a single terminal device, or measurement data of a group of terminal devices. When the first device includes a CU or a DU, the performance data of the first device includes one or more of the following: coverage strength, coverage quality, quantity of handovers, throughput rate, quantity of access attempts, or quantity of call drops. When the first device includes an RU, the performance data of the first device includes one or more of the following: transmit power, receive level, noise floor, or bit error rate. The measurement data of the single terminal device includes one or more of the following: throughput rate, traffic volume, and quantity of handovers. The measurement data of the group of terminal devices includes one or more of the following: throughput rate, traffic volume, and quantity of handovers.

In a possible implementation method, the transceiver unit 520 is further configured to send the sample data when the output result indicates to report the sample data; or the processing unit 510 is further configured to discard the sample data when the output result indicates not to report the sample data.

In a possible implementation method, the first instruction further includes an identifier of the first device.

In a possible implementation method, the first device includes a CU or a DU; and that the transceiver unit 520 is configured to receive the first instruction specifically includes: The transceiver unit 520 is configured to receive the first instruction from a near-real-time radio access network intelligent controller through an interface between the first device and the near-real-time radio access network intelligent controller.

In a possible implementation method, the first device includes an RU; and that the transceiver unit 520 is configured to receive the first instruction specifically includes: The transceiver unit 520 is configured to receive the first instruction from a near-real-time radio access network intelligent controller through an interface between the RU and a DU.

In a possible implementation method, the transceiver unit 520 is further configured to receive a second instruction, where the second instruction includes file information of the first model.

In a possible implementation method, the first device includes a CU or a DU; and that the transceiver unit 520 is configured to receive the second instruction specifically includes: The transceiver unit 520 is configured to receive the second instruction from a near-real-time radio access network intelligent controller through an interface between the first device and the near-real-time radio access network intelligent controller.

In a possible implementation method, the first device includes an RU; and that the transceiver unit 520 is configured to receive the second instruction specifically includes: The transceiver unit 520 is configured to receive the second instruction from a near-real-time radio access network intelligent controller through an interface between the RU and a DU.

In a possible implementation method, the indication information further indicates a data collection type, and the data collection type is collecting performance data of the first device, collecting performance data and/or network data of a single terminal device, or collecting performance data and/or a network data of a group of terminal devices.

When the communication apparatus 500 is configured to implement the function of the second device in the foregoing method embodiment, the processing unit 510 is configured to generate a first model; and the transceiver unit 520 is configured to send a first instruction to the first device, where the first instruction includes indication information and an identifier of the first model, and the indication information indicates to perform data reporting based on the first model.

In a possible implementation method, the transceiver unit 520 is further configured to receive sample data from the first device, where the sample data meets a first condition, and the first condition includes at least one of the following: a feature value of at least one service feature in the sample data meets a feature value magnitude requirement; the feature value of the at least one service feature in the sample data meets a reporting periodicity requirement, and the reporting periodicity requirement is related to a degree of variation of the feature value of the service feature within a specified duration; and the feature value of the at least one service feature in the sample data meets a feature value distribution requirement corresponding to the service feature.

In a possible implementation method, the first instruction further includes an identifier of the first device.

In a possible implementation method, that the processing unit 510 is configured to generate the first model specifically includes: The processing unit 510 is configured to: receive a service requirement via the transceiver unit 520, where the service requirement indicates at least one of a first feature value magnitude requirement, a quantity of first feature values, a first feature value distribution requirement, or a first reporting periodicity requirement of a to-be-collected service feature, and the first reporting periodicity requirement is related to a degree of variation of a feature value of the service feature within the specified duration; and generate the first model based on the service requirement.

In a possible implementation method, the processing unit 510 is further configured to: determine update information based on the collected sample data and the service requirement, where the update information includes at least one of a second feature value magnitude requirement, a quantity of second feature values, a second feature value distribution requirement, or a second reporting periodicity requirement of the to-be-collected service feature, and the second reporting periodicity requirement is related to the degree of variation of the feature value of the service feature within the specified duration; and update the first model based on the update information, to obtain a second model; and the transceiver unit 520 is further configured to send file information of the second model to the first device.

In a possible implementation method, the first device includes a CU or a DU, and the second device includes a near-real-time radio access network intelligent controller; and that the transceiver unit 520 is configured to send the first instruction to the first device specifically includes: The transceiver unit 520 is configured to send the first instruction to the first device through an interface between the first device and the second device.

In a possible implementation method, the first device includes an RU, and the second device includes a near-real-time radio access network intelligent controller; and that the transceiver unit 520 is configured to send the first instruction to the first device specifically includes: The transceiver unit 520 is configured to send the first instruction to the first device through an interface between the second device and a DU.

In a possible implementation method, the transceiver unit 520 is further configured to send a second instruction to the first device, where the second instruction includes file information of the first model.

In a possible implementation method, the first device includes a CU or a DU, and the second device includes a near-real-time radio access network intelligent controller; and that the transceiver unit 520 is configured to send the second instruction to the first device specifically includes: The transceiver unit 520 is configured to send the second instruction to the first device through an interface between the first device and the second device.

In a possible implementation method, the first device includes an RU, and the second device includes a near-real-time radio access network intelligent controller; and that the transceiver unit 520 is configured to send the second instruction to the first device specifically includes: The transceiver unit 520 is configured to send the second instruction to the first device through an interface between the second device and a DU.

In a possible implementation method, the indication information further indicates a data collection type, and the data collection type is collecting performance data of the first device, collecting performance data and/or network data of a single terminal device, or collecting performance data and/or a network data of a group of terminal devices.

For more detailed descriptions of the processing unit 510 and the transceiver unit 520, directly refer to related descriptions in the foregoing method embodiment. Details are not described herein again.

The communication apparatus 600 shown in FIG. 6 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to store instructions executed by the processor 610, input data needed by the processor 610 to run the instructions, or data generated after the processor 610 runs the instructions.

When the communication apparatus 600 is configured to implement the method embodiment, the processor 610 is configured to implement a function of the processing unit 510, and the interface circuit 620 is configured to implement a function of the transceiver unit 520.

It may be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may be composed of corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM) or any other form of storage medium well known in the art. For example, a storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in the first device or the second device. Certainly, the processor and the storage medium may alternatively exist in an access network device or a terminal as discrete components.

All or some of the foregoing embodiments may be implemented by using software, hardware, firmware, or any combination thereof. When software is used to implement the embodiments, the embodiments may be completely or partially implemented in a form of a computer program product. The computer program product includes one or more computer programs or instructions. The computer program (computer program) is a set of instructions that indicate each step of an action of an electronic computer or another device having a message processing capability, and is usually written in a program design language and run on a target architecture. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between associated objects. In a formula in this application, the character "/" indicates a "division" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first device or a module in the first device, wherein the method comprises:
receiving a first instruction, wherein the first instruction comprises indication information and an identifier of a first model, and the indication information indicates to perform data reporting based on the first model; and
inputting collected sample data into the first model to obtain an output result, wherein the output result indicates to report or not to report the sample data.

2. The method according to claim 1, wherein when the sample data meets a first condition, the output result indicates to report the sample data, and the first condition comprises at least one of the following:
a feature value of at least one service feature in the sample data meets a feature value magnitude requirement;
the feature value of the at least one service feature in the sample data meets a reporting periodicity requirement, and the reporting periodicity requirement is related to a degree of variation of the feature value of the service feature within a specified duration; and
the feature value of the at least one service feature in the sample data meets a feature value distribution requirement corresponding to the service feature.

3. The method according to claim 2, wherein the degree of variation of the feature value of the service feature within the specified duration comprises a variance, a mean absolute error, an autocorrelation coefficient, a signal-to-noise ratio, or peak detection of the feature value of the service feature within the specified duration.

4. The method according to claim 2 or 3, wherein the service feature comprises one or more of the following:
performance data of the first device, measurement data of a single terminal device, or measurement data of a group of terminal devices, wherein
when the first device comprises a central unit or a distributed unit, the performance data of the first device comprises one or more of the following: coverage strength, coverage quality, quantity of handovers, throughput rate, quantity of access attempts, or quantity of call drops; or
when the first device comprises a radio unit, the performance data of the first device comprises one or more of the following: transmit power, receive level, noise floor, or bit error rate;
the measurement data of the single terminal device comprises one or more of the following: throughput rate, traffic volume, and quantity of handovers; and
the measurement data of the group of terminal devices comprises one or more of the following: throughput rate, traffic volume, and quantity of handovers.

5. The method according to any one of claims 1 to 4, wherein the method further comprises:
sending the sample data when the output result indicates to report the sample data; or
discarding the sample data when the output result indicates not to report the sample data.

6. The method according to any one of claims 1 to 5, wherein the first instruction further comprises an identifier of the first device.

7. The method according to any one of claims 1 to 6, wherein the first device comprises a central unit or a distributed unit; and
the receiving the first instruction comprises:
receiving the first instruction from a near-real-time radio access network intelligent controller through an interface between the first device and the near-real-time radio access network intelligent controller.

8. The method according to any one of claims 1 to 6, wherein the first device comprises a radio unit; and
the receiving the first instruction comprises:
receiving the first instruction from a near-real-time radio access network intelligent controller through an interface between the radio unit and a distributed unit.

9. The method according to any one of claims 1 to 6, wherein the method further comprises:
receiving a second instruction, wherein the second instruction comprises file information of the first model.

10. The method according to claim 9, wherein the first device comprises a central unit or a distributed unit; and
the receiving the second instruction comprises:
receiving the second instruction from a near-real-time radio access network intelligent controller through an interface between the first device and the near-real-time radio access network intelligent controller.

11. The method according to claim 9, wherein the first device comprises a radio unit; and
the receiving the second instruction comprises:
receiving the second instruction from a near-real-time radio access network intelligent controller through an interface between the radio unit and a distributed unit.

12. The method according to any one of claims 1 to 11, wherein the indication information further indicates a data collection type, and the data collection type is collecting performance data of the first device, collecting performance data and/or network data of a single terminal device, or collecting performance data and/or a network data of a group of terminal devices.

13. A communication method, applied to a second device or a module in the second device, wherein the method comprises:
generating a first model; and
sending a first instruction to a first device, wherein the first instruction comprises indication information and an identifier of the first model, and the indication information indicates to perform data reporting based on the first model.

14. The method according to claim 13, wherein the method further comprises:
receiving sample data from the first device, wherein the sample data meets a first condition, and the first condition comprises at least one of the following:
a feature value of at least one service feature in the sample data meets a feature value magnitude requirement;
the feature value of the at least one service feature in the sample data meets a reporting periodicity requirement, and the reporting periodicity requirement is related to a degree of variation of the feature value of the service feature within a specified duration; and
the feature value of the at least one service feature in the sample data meets a feature value distribution requirement corresponding to the service feature.

15. The method according to claim 13 or 14, wherein the first instruction further comprises an identifier of the first device.

16. The method according to any one of claims 13 to 15, wherein the generating the first model comprises:
receiving a service requirement, wherein the service requirement indicates at least one of a first feature value magnitude requirement, a quantity of first feature values, a first feature value distribution requirement, or a first reporting periodicity requirement of a to-be-collected service feature, and the first reporting periodicity requirement is related to a degree of variation of a feature value of the service feature within the specified duration; and
generating the first model based on the service requirement.

17. The method according to claim 16, wherein the method further comprises:
determining update information based on the collected sample data and the service requirement, wherein the update information comprises at least one of a second feature value magnitude requirement, a quantity of second feature values, a second feature value distribution requirement, or a second reporting periodicity requirement of the to-be-collected service feature, and the second reporting periodicity requirement is related to the degree of variation of the feature value of the service feature within the specified duration;
updating the first model based on the update information, to obtain a second model; and
sending file information of the second model to the first device.

18. The method according to any one of claims 13 to 17, wherein the first device comprises a central unit or a distributed unit, and the second device comprises a near-real-time radio access network intelligent controller; and
the sending the first instruction to the first device comprises:
sending the first instruction to the first device through an interface between the first device and the second device.

19. The method according to any one of claims 13 to 17, wherein the first device comprises a radio unit, and the second device comprises a near-real-time radio access network intelligent controller; and
the sending the first instruction to the first device comprises:
sending the first instruction to the first device through an interface between the second device and a distributed unit.

20. The method according to any one of claims 13 to 17, wherein the method further comprises:
sending a second instruction to the first device, wherein the second instruction comprises file information of the first model.

21. The method according to claim 20, wherein the first device comprises a central unit or a distributed unit, and the second device comprises a near-real-time radio access network intelligent controller; and
the sending the second instruction to the first device comprises:
sending the second instruction to the first device through an interface between the first device and the second device.

22. The method according to claim 20, wherein the first device comprises a radio unit, and the second device comprises a near-real-time radio access network intelligent controller; and
the sending the second instruction to the first device comprises:
sending the second instruction to the first device through an interface between the second device and a distributed unit.

23. The method according to any one of claims 13 to 22, wherein the indication information further indicates a data collection type, and the data collection type is collecting performance data of the first device, collecting performance data and/or network data of a single terminal device, or collecting performance data and/or a network data of a group of terminal devices.

24. A communication apparatus, comprising a unit configured to perform the method according to any one of claims 1 to 12, or comprising a unit configured to perform the method according to any one of claims 13 to 23.

25. A computer program product, wherein the computer program product comprises instructions; and when the instructions are run on a processor, the processor is caused to perform the method according to any one of claims 1 to 12 or the method according to any one of claims 13 to 23.

26. A computer-readable storage medium, wherein the storage medium stores a computer program or instructions; and when the computer program or the instructions are executed by a communication apparatus, the method according to any one of claims 1 to 12 is implemented, or the method according to any one of claims 13 to 23 is implemented.

27. A communication system, comprising a first device configured to perform the method according to any one of claims 1 to 12, and a second device configured to perform the method according to any one of claims 13 to 23.
